# EUROPÄISCHE PATENTSCHRIFT

(11) **EP 3 396 172 B1**
(45) Veröffentlichungstag und Bekanntmachung des Hinweises auf die Patenterteilung: **03.06.2020**
(21) Anmeldenummer: 18167830.1
(22) Anmeldetag: 17.04.2018
(51) Int. Cl.: F04D 27/00, F24F 11/52, F24F 11/89, G06K 19/07, G06K 19/077

(54) **VENTILATOR MIT EINER VORRICHTUNG ZUM AUSLESEN UND ANZEIGEN DER KONFIGURATIONSPARAMETER AUS EINEM DATENSPEICHER DES VENTILATORS**
FAN WITH A DEVICE FOR READING AND DISPLAYING CONFIGURATION PARAMETERS FROM A DATA STORAGE UNIT OF THE FAN
VENTILATEUR AVEC UN DISPOSITIF DE LECTURE ET D'AFFICHAGE DES PARAMÈTRES DE CONFIGURATION À PARTIR D'UNE UNITÉ DE STOCKAGE DE DONNÉES DU VENTILATEUR

(30) Priorität: 27.04.2017 DE 102017109085
(43) Veröffentlichungstag der Anmeldung: 31.10.2018
(73) Patentinhaber: ebm-papst Mulfingen GmbH & Co. KG, 74673 Mulfingen (DE)
(72) Erfinder: HUMM, Markus, 74679 Weißbach (DE); WYSTUP, Ralph, 74653 Künzelsau (DE); FESSEL, Andreas, 97990 Weikersheim (DE)
(74) Vertreter: Staeger & Sperling Partnerschaftsgesellschaft mbB

(56) Entgegenhaltungen:
- EP-A1- 3 096 021
- US-A1- 2008 168 780
- US-A1- 2014 079 564
- US-A1- 2016 123 802
- US-A1- 2017 048 189
- US-B2- 9 190 998

## Beschreibung

Die Erfindung betrifft einen Ventilator mit einer Speicherauslesevorrichtung zum Auslesen und Anzeigen von Konfigurationsparametern aus dem Datenspeicher des Ventilators im spannungsfreien Zustand des Ventilators. Handelsübliche und bekannte Ventilatoren besitzen eine Vielzahl an Konfigurationsparametern und Betriebsdaten (z. B. Ist-Drehzahl, Elektroniktemperatur, etc.), über die ein Anwender typischerweise Informationen benötigt. Diese Parameter können derzeit nur im spannungsbehafteten Zustand des Ventilators ausgelesen werden. Sobald der Ventilator spannungsfrei oder nicht an eine Spannungsquelle angeschlossen ist, mangelt es an einem Zugriff auf diese Daten. Die US 2017/048189 A1 und die US 2008/168780 A1 offenbaren jeweils ein Verfahren bzw. ein System, das entsprechende Konfigurationsparameter, in diesem Fall Netzwerkadressen von Ventilatoren, feststehenden Labels zuweist. Dabei sind die Labels aber nicht geeignet dynamische Betriebsdaten auszugeben bzw. in einem spannungsfreien Zustand diese Daten anzuzeigen.

Viele Ventilatoren besitzen bereits eine LED zur Anzeige des Ventilatorzustands mittels z. B. einem Blinkcode der LED. Auch diese Art der Funktionsanzeige funktioniert nur im "mit Spannung versorgten Zustand" des Ventilators. Die US 2016/123802 A1 offenbart eine Anzeigevorrichtung mittels LED's oder elektronischer Tinte für die gemessenen Werte einer Belichtung bei einer Depressions-Therapie.

Die EP 3 096 021 A1 offenbart eine Anordnung bzw. ein Verfahren zur Anzeige von codierten Diagnosedaten zur Fernauswertung und die US 9 190 998 B2 offenbart einen optischen Schalter.

Es ist daher Aufgabe der vorliegenden Erfindung, eine Lösung vorzuschlagen, wie mit einfachen Mitteln und möglichst ohne große Änderungen an bestehenden Ventilatorkonzepten, die Konfigurationsparameter und Betriebsparameter aus einem Speicher des Ventilators im spannungsfreien Zustand ausgelesen werden können unter Berücksichtigung der Anforderung, dass die Dichtheit des Ventilatorgehäuses gegen Umgebungseinflüsse gewahrt werden soll.

Diese Aufgabe wird mit einem Ventilator mit den Merkmalen nach Anspruch 1 gelöst.

Erfindungsgemäß wird hierzu ein Ventilator mit einer Speicherauslesevorrichtung zum Auslesen von Konfigurationsparametern aus einem Datenspeicher des Ventilators mit einer Anzeigevorrichtung ausgebildet, wobei die Anzeigevorrichtung Informationen über die Konfigurationsparameter im spannungsfreien Zustand des Ventilators anzeigt oder anzeigen kann.

Erfindungsgemäß ist vorgesehen, dass die Anzeigevorrichtung ein elektronisches bistabiles Display ist, das ausgebildet ist einen 1D- oder 2D-Barcode darzustellen, welcher die aktuellen Informationen über die Konfigurationsparameter beinhaltet.

Besonders bevorzugt ist die Ausgestaltung der Erfindung mit einer Lösung, bei der das bistabile Display ein E-Paper ist, welches nur zum Bildwechsel, nicht jedoch zur Bildanzeige elektrische Energie benötigt.

Mit Vorteil ist weiter vorgesehen, dass das bistabile Display zum drahtlosen Übertragen der Konfigurationsparameter einen RFID-Empfänger besitzt, welcher Daten von einem RFID-Sender des Ventilators empfangen kann. Hierzu ist der Sende-Empfangsprozess speziell auf das Senden und Empfangen der Konfigurationsdaten abgestimmt.

Dies dient unter anderem auch dazu, dass das Display keine direkte kabelgebundene oder anderweitige Kontaktierung zur Ventilatorelektronik benötigt, was einen "Durchbruch" durch das Gehäuse des Ventilators erforderlich machen würde. Die beschriebene drahtlose Technik funktioniert vornehmlich dann, wenn das Ventilatorgehäuse ein Kunststoffgehäuse ist.

Platziert man einen RFID-fähigen EEPROM-Chip mit auf die Display-Elektronik und hält diesen Synchron mit dem im Ventilator integrierten EEPROM, so hat man eine Art "Range-Extender" oder eine Art "Bridge". Man kann damit auch Probleme, wie sie derzeit mit dem herkömmlichen Antennendesign auftreten, auf einfache Art lösen. Eine Konfigurationsapplikation kann den EEPROM-Chip aktualisieren und für ein Kopieren der Daten sorgen, sobald wieder eine Spannungsversorgung für den Ventilator verfügbar ist. Das interne EEPROM des Ventilators wird aus Gründen der Zugriffszeiten und der Ausfallsicherheit in einer bevorzugten Ausgestaltung weiterhin verwendet.

Sollen auch Ist-Werte auf dem Display als Bestandteil des Barcodes angezeigt werden, ist für ein optisches Lesegerät nicht ersichtlich, ob die aktuell angezeigten Informationen die jeweiligen Ist-Werte repräsentieren oder ob diese mangels Spannungsversorgung lediglich nicht aktualisiert sind. Für die Lösung dieses Teilproblems ist vorgesehen, dass ein Lesegerät Informationen über unterschiedliche Zustände des Displays einfach im zeitlichen aufeinanderfolgen Abstand abtastet und feststellt, ob sich der Displayinhalt ändert.

Der Ventilator verfügt in einer weiteren vorteilhaften Ausgestaltung der Erfindung über einen Energy-Harvesting-Generator, um elektronische Bauteile auch im spannungsfreien Zustand des Ventilators soweit mit Energie zu versorgen, dass eine Anzeige der Konfigurationsparameter gewährleistet ist. Ein solcher Energy-Harvesting-Generator ist ausgebildet zur Gewinnung kleiner Mengen von elektrischer Energie aus Quellen wie Umgebungstemperatur, Vibrationen oder Luftströmungen.

Das Display ist in einer alternativen oder ergänzenden Ausführung zur Erzeugung von elektrischer Energie mit einer teiltransparenten Solarzelle oder einem lichtaktivierbaren Film ausgebildet, um die elektronischen Bauteile des Ventilators auch im spannungsfreien Zustand des Ventilators soweit mit Energie zu versorgen, dass eine aktualisierbare Anzeige der Konfigurationsparameter gewährleistet ist.

Weiter ist mit Vorteil vorgesehen, dass eine Steuerungselektronik des Ventilators mit einem EEPROM-Chip ausgestattet ist und die Elektronik des Displays mit einem RFID-fähigen EEPROM-Chip ausgebildet ist, die mit dem EEPROM-Chip der Steuerungselektronik des Ventilators synchronisiert werden kann. Der Synchronisationsprozess kann über eine integrierte Software oder eine Applikationssoftware, die von einem externen Gerät aktivierbar ist, gesteuert werden.

Die Aktualisierbarkeit des Displays mittels RFID-Technik ist auch in der Fertigung der Ventilatoren vorteilhaft, da mittels RFID eine Energieübertragung möglich ist. Damit hätte man einen aktualisierbaren optoelektronisch lesbaren Laufzettel fest mit dem Gerät verbunden. Die Information kann dabei im Bedarfsfall von einem entsprechend ausgestatteten Smartphone gescannt werden.

Alternativ könnte man auch einen Displaybereich des Displays definieren, der nur von außen mittels RFID aktualisiert werden kann. Dieser Bereich könnte z. B. einen oder mehrere Reparaturmarker enthalten, womit man bei jeder optischen Erfassung des Barcodes stets auch die Information erhalten würde, ob das betreffende Gerät bereits repariert wurde.

In einer alternativen Ausgestaltung, die nicht Teil der Erfindung ist, kann vorgesehen sein, dass die Anzeigevorrichtung über wenigstens eine LED verfügt, die durch Energy-Harvesting gespeist, auch im spannungsfreien Zustand die Konfigurationsdaten als Signalfolge von Lichtsignalen aussendet.

Ferner ist bevorzugt eine von einem Bediener aktivierbare Umschaltvorrichtung vorgesehen, mittels der zwischen mehreren Anzeigen mit verschiedenen Konfigurationsparameter oder Momentanwerten zu unterschiedlich konfigurierten Zuständen des Ventilators hin- und hergewechselt werden kann. Besonders vorteilhaft ist es, wenn die Umschaltvorrichtung ein lichtsensitives elektronisches Halbleiterbauteil umfasst, das über eine Emissionsöffnung mit Lichtenergie zum Zweck des Energy-Harvesting beaufschlagt werden kann oder davon getrennt werden kann.

Das lichtsensitive elektronische Halbleiterbauteil kann z. B. entweder eine Fotodiode oder ein Fototransistor sein, welcher beim Abdecken oder Verschließen der Emissionsöffnung einen Schaltvorgang zum Umschalten der Anzeige auslösen kann oder auslöst. So ist es möglich durch das Abdecken der Emissionsöffnung von einer Anzeige zur nächsten zu wechseln. Die für den Dunkelzustand benötigte Energie wird dafür vorher zwischengespeichert.

In einer weiteren Ausgestaltung der Erfindung ist vorgesehen, dass sowohl ein lichtemittierendes Element (z. B. eine LED) als auch das genannte lichtsensitive elektrische Halbleiterbauelement (z. B. der Fototransistor) über einen gemeinsamen Lichtwellenleiter zum Senden und Empfangen von Licht mit einem zur Emissionsöffnung führenden Lichtwellenleiter verbunden sind bzw. unterhalb des Lichtwellenleiters platziert sind.

Ferner kann in einer alternativen Lösung der Erfindung vorgesehen sein, dass die Anzeigevorrichtung hinter einem transparenten Sichtfenster des Gehäuses des Ventilators angeordnet ist, so dass eine drahtgebundene Kommunikation zwischen Display und Ventilatortechnik möglich ist und die Anzeige direkt mit der Elektronik des Ventilators verbindbar ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Der Schutzumfang der Erfindung ist jedoch ausschließlich durch die nachfolgenden Ansprüche bestimmt. Es zeigen:
- Fig. 1: eine schematische Ansicht eines erfindungsgemäßen Ventilators mit einer Speicherauslesevorrichtung und
- Fig. 2: eine schematische Schnittansicht eines erfindungsgemäßen Ventilators mit einer Umschaltvorrichtung.

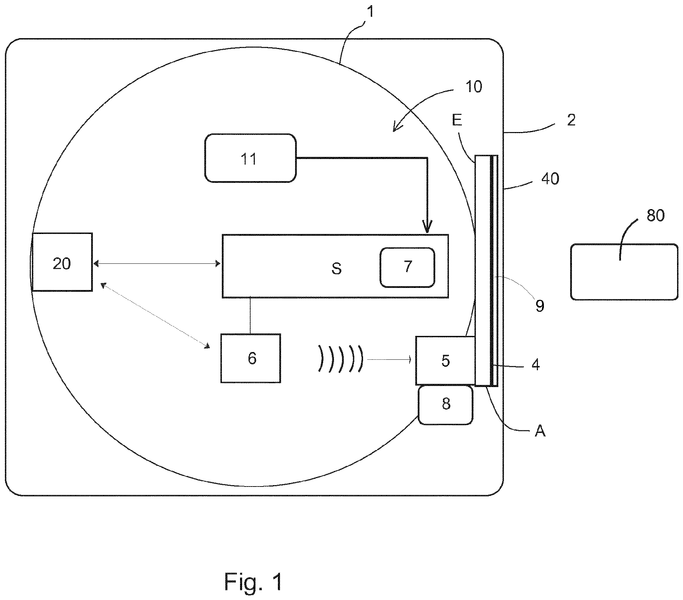

Im Folgenden wird die Erfindung mit Bezug auf die Figuren 1 bis 2 näher erläutert, wobei gleiche Bezugszeichen auf gleiche funktionale und/oder strukturelle Merkmale hinweisen.

Die Fig. 1 zeigt eine schematische Ansicht eines erfindungsgemäßen Ventilators 1 mit einer Speicherauslesevorrichtung 10. Der Ventilator 1 verfügt über ein Gehäuse 2, welches auch die Steuerung aufnimmt.

Die Speicherauslesevorrichtung 10 ist ausgebildet zum Auslesen von Konfigurationsparametern aus einem Datenspeicher 11 des Ventilators. Dieser verfügt über eine Anzeigevorrichtung A, wobei die Anzeigevorrichtung A Informationen über die Konfigurationsparameter im spannungsfreien Zustand des Ventilators 1 anzeigt.

Die Anzeigevorrichtung A stellt in dem Ausführungsbeispiel nach Figur 1 ein elektronisches bistabiles Display 4 in der Form eines E-Papers dar, das ausgebildet ist einen 1D- oder 2D-Barcode darzustellen, welcher die aktuellen Informationen über die Konfigurationsparameter beinhaltet. Das bistabile Display 4 benötigt nur zum Bildwechsel, nicht jedoch zur Bildanzeige elektrische Energie. Das Display 4 verfügt zum drahtlosen Übertragen der Konfigurationsparameter über einen RFID-Empfänger 5, der auf der Elektronikeinheit E des Displays 4 angeordnet ist.

In der Steuerung S des Ventilators 1 ist ferner ein RFID-Sender 6 zur Kommunikation mit dem RFID-Empfänger 5 des Displays 4 vorgesehen.

Der Ventilator 1 verfügt in diesem Ausführungsbeispiel über zwei netzunabhängige Energiequellen. Zum einen ist ein Energy-Harvesting-Generator 20 vorgesehen, um die elektronischen Bauteile (wie z. B. RFID-Chips, Anzeige, Steuerung, etc.) auch im spannungsfreien Zustand des Ventilators soweit mit Energie zu versorgen, dass eine aktualisierte Anzeige der Konfigurationsparameter an dem bistabilen Display 4 gewährleistet ist.

Zum anderen ist zur Erzeugung von und zur Versorgung der zur Anzeige benötigten Komponenten mit elektrischer Energie das Display 4 mit einer teiltransparenten Solarzelle 40 ausgebildet.

Die Steuerungselektronik S des Ventilators 1 ist ferner mit einem EEPROM-Chip 7 ausgestattet. Die Elektronik E des Displays 4 ist mit einem RFID-fähigen EEPROM-Chip 8 ausgebildet, die mit dem EEPROM-Chip 7 synchronisiert werden kann.

Ferner ist ein Lesegerät 80 (z. B. ein Smartphone mit Lesefunktion und Softwareapplikation) gezeigt, um die Barcodes auf dem Display 4 zu scannen und auszuwerten oder andere Softwareanwendungen in Verbindung mit dem Ventilator 1 zu nutzen.

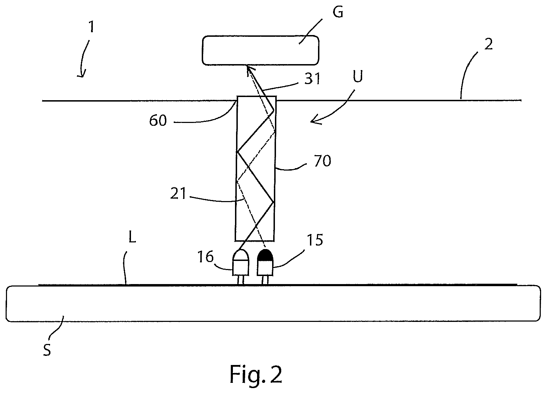

In der Figur 2 ist eine Ausgestaltung einer Umschaltvorrichtung U gezeigt. Hinter einer Emissionsöffnung 60 sind auf der Leiterplatte L, ein lichtsensitives elektronisches Halbleiterbauteil, nämlich ein Fototransistor 15 und daneben, ein lichtemittierendes Element, nämlich eine LED 16 angeordnet.

Der Fototransistor 15 und die LED 16 sind zum Senden und Empfangen von Lichtsignalen 21, 31 über einen mit der Emissionsöffnung 60 verbundenen Lichtwellenleiter 70 verbunden. Lediglich beispielhaft sind Lichtwege 21, 31 zwischen dem Fototransistor 15 bzw. der LED 16 und der Umgebung durch den Lichtwellenleiter 70 gezeigt.

Der Fototransistor 15 empfängt Umgebungslicht von einer Lichtquelle über den Lichtwellenleiter 70 und kann durch Veränderung einer bestimmten Strahlungsdichte an Lichtstrahlen einen Schaltprozess auslösen, sobald nämlich die Emissionsöffnung 60 mit einem Gegenstand G oder mit einem Finger abgedeckt wird.

Die Erfindung beschränkt sich in ihrer Ausführung nicht auf die vorstehend angegebenen bevorzugten Ausführungsbeispiele. Vielmehr ist eine Anzahl von Varianten und Konfigurationen denkbar, welche von der dargestellten Lösung auch bei grundsätzlich anders gearteten Ausführungen Gebrauch macht, so wie z. B. die Verwendung eines Mehrfarben-E-Papers und die Nutzung eines Energiepuffers zum Speichern von Lichtenergie. Der Schutzumfang der Erfindung ist jedoch ausschließlich durch die nachfolgenden Ansprüche bestimmt.

## Patentansprüche

1. Ventilator (1) mit einer Speicherauslesevorrichtung (10) zum Auslesen von Konfigurationsparametern aus einem Datenspeicher (11) des Ventilators (1) ausgebildet mit einer Anzeigevorrichtung (A), wobei die Anzeigevorrichtung (A) Informationen über die Konfigurationsparameter im spannungsfreien Zustand des Ventilators (1) anzeigt, wobei die Anzeigevorrichtung (A) ein elektronisches bistabiles Display (4) ist, **dadurch gekennzeichnet, dass** das bistabile Display ausgebildet ist einen 1D- oder 2D-Barcode darzustellen, welcher die aktuellen Informationen über die Konfigurationsparameter beinhaltet.

2. Ventilator nach Anspruch 1, **dadurch gekennzeichnet, dass** das bistabile Display (4) ein E-Paper darstellt, welches nur zum Bildwechsel, nicht jedoch zur Bildanzeige elektrische Energie benötigt.

3. Ventilator (1) nach Anspruch 1 oder 2, **dadurch gekennzeichnet, dass** das Display (4) zum drahtlosen Übertragen der Konfigurationsparameter einen RFID-Empfänger (5) besitzt, welcher ausgebildet ist, Daten von einem RFID-Sender (6) des Ventilators (1) zu empfangen.

4. Ventilator (1) nach einem der Ansprüche 1 bis 3, **dadurch gekennzeichnet, dass** der Ventilator (1) über einen oder mehere Energy-Harvesting-Generatoren (20) verfügt, um elektronische Bauteile auch im spannungsfreien Zustand des Ventilators (1) soweit mit Energie zu versorgen, dass eine aktualisierte Anzeige der Konfigurationsparameter gewährleistet ist.

5. Ventilator (1) nach Anspruch 1 bis 3, **dadurch gekennzeichnet, dass** das Display (4) zur Erzeugung von elektrischer Energie mit einer teiltransparenten Solarzelle oder einem lichtaktivierbaren Film (40) ausgebildet ist, um elektronische Bauteile des Ventilators (1) auch im spannungsfreien Zustand des Ventilators (1) soweit mit Energie zu versorgen, dass eine aktualisierte Anzeige der Konfigurationsparameter gewährleistet ist.

6. Ventilator (1) nach einem der Ansprüche 1 bis 5, **dadurch gekennzeichnet, dass** eine Steuerungselektronik (S) des Ventilators (1) mit einem EEPROM-Chip (7) ausgestattet ist und die Elektronik des Displays (4) mit einem RFID-fähigen EEPROM-Chip (8) ausgebildet ist, die ausgebildet ist, mit dem EEPROM-Chip (7) synchronisiert zu werden.

7. Ventilator (1) nach einem der Ansprüche 1 bis 6, **dadurch gekennzeichnet, dass** eine von einem Bediener aktivierbare Umschaltvorrichtung vorgesehen ist, die dazu ausgebildet ist, zwischen verschiedenen Anzeigen zu Konfigurationsparametern zu unterschiedlich konfigurierten Zuständen des Ventilators (1) hin-und herzuwechseln.

8. Ventilator (1) nach Anspruch 7, **dadurch gekennzeichnet, dass** die Umschaltvorrichtung wenigstens ein lichtsensitives elektronisches Halbleiterbauteil (15) umfasst, das derart angeordnet ist, dass es über eine Emissionsöffnung (60) mit Lichtenergie beaufschlagt werden kann.

9. Ventilator (1) nach Anspruch 8, **dadurch gekennzeichnet, dass** das lichtsensitive elektronische Halbleiterbauteil (15) entweder eine Fotodiode oder ein Fototransistor ist, welcher derart angeordnet ist, dass beim Abdecken oder Verschließen der Emissionsöffnung (60) ein Schaltvorgang zum Umschalten der Anzeige ausgelöst wird.

10. Ventilator (1) nach Anspruch 1 bis 6, **dadurch gekennzeichnet, dass** die Anzeigevorrichtung (A) hinter einem transparenten Sichtfenster (9) eines Gehäuses (2) des Ventilators angeordnet und elektrisch kontaktierend mit einer Leiterplatte einer Ventilatorsteuerung verbunden ist.

## Claims

1. Fan (1) having a memory read-out device (10) for reading-out configuration parameters from a data memory (11) of the fan (1), formed with a display device (A), the display device (A) displaying information about the configuration parameters in the zero potential state of the fan (1), wherein the display device (A) is an electronic bistable display (4), **characterized in that** the bistable display is formed to display a 1D or 2D barcode containing the current information about the configuration parameters.

2. Fan according to claim 1, **characterized in that** the bistable display (4) represents an e-paper which requires electrical energy only for screen change, but not for screen display.

3. Fan (1) according to claim 1 or 2, **characterized in that** the display (4) has an RFID receiver (5) for wireless transmission of the configuration parameters, which is formed to receive data from an RFID transmitter (6) of the fan (1).

4. Fan (1) according to one of claims 1 to 3, **characterized in that** the fan (1) has one or more energy harvesting generators (20) in order to supply electronic components with energy even in the zero potential state of the fan (1) to such an extent that an updated display of the configuration parameters is ensured.

5. Fan (1) according to claim 1 to 3, **characterized in that** the display (4) for generating electrical energy is formed with a partially transparent solar cell or a light-activatable film (40) in order to supply electronic components of the fan (1) with energy even in the zero potential state of the fan (1) to such an extent that an updated display of the configuration parameters is ensured.

6. Fan (1) according to one of claims 1 to 5, **characterized in that** a control electronics (S) of the fan (1) is provided with an EEPROM chip (7) and the electronics of the display (4) is formed with an RFID-capable EEPROM chip (8) formed to be synchronized with the EEPROM chip (7).

7. Fan (1) according to one of the claims 1 to 6, **characterized in that** a switching device which can be activated by an operator is provided, which is formed to switch back and forth between different displays of configuration parameters for differently configured states of the fan (1).

8. Fan (1) according to claim 7, **characterized in that** the switching device comprises at least one light-sensitive electronic semiconductor component (15) which is arranged in such a way that light energy can be applied to it via an emission opening (60).

9. Fan (1) according to claim 8, **characterized in that** the light-sensitive electronic semiconductor component (15) is either a photodiode or a phototransistor, which is arranged in such a way that when the emission opening (60) is covered or closed, a switching operation for switching the display is triggered.

10. Fan (1) according to claim 1 to 6, **characterized in that** the display device (A) is arranged behind a transparent viewing window (9) of a housing (2) of the fan and is connected in an electrically contacting manner to a printed circuit board of a fan controller.

## Revendications

1. Ventilateur (1) avec un dispositif de lecture d'unité de stockage (10) pour la lecture de paramètres de configuration à partir d'une unité de stockage de données (11) du ventilateur (1) réalisé avec un dispositif d'affichage (A), dans lequel le dispositif d'affichage (A) affiche des informations relatives aux paramètres de configuration à l'état hors tension du ventilateur (1), dans lequel le dispositif d'affichage (A) est un écran (4) bistable électronique, **caractérisé en ce que** l'écran bistable est réalisé pour représenter un code-barres 1D ou 2D, lequel contient les informations actuelles relatives aux paramètres de configuration.

2. Ventilateur selon la revendication 1, **caractérisé en ce que** l'écran (4) bistable représente un E-paper, lequel a besoin d'énergie électrique uniquement pour le changement d'image, mais pas pour l'affichage d'image.

3. Ventilateur (1) selon la revendication 1 ou 2, **caractérisé en ce que** l'écran (4) dispose pour la transmission sans fil des paramètres de configuration un récepteur RFID (5), lequel est réalisé pour recevoir des données d'un émetteur RFID (6) du ventilateur (1).

4. Ventilateur (1) selon l'une quelconque des revendications 1 à 3, **caractérisé en ce que** le ventilateur (1) dispose d'un ou plusieurs générateurs de captage d'énergie (20) pour alimenter en énergie des composants électroniques également à l'état hors tension du ventilateur (1) jusqu'à ce qu'un affichage actualisé des paramètres de configuration soit assuré.

5. Ventilateur (1) selon la revendication 1 à 3, **caractérisé en ce que** l'écran (4) est réalisé pour la génération d'énergie électrique avec une cellule solaire partiellement transparente ou un film photoactivable (40) pour alimenter en énergie des composants électroniques du ventilateur (1) également à l'état hors tension du ventilateur (1) jusqu'à ce qu'un affichage actualisé des paramètres de configuration soit assuré.

6. Ventilateur (1) selon l'une quelconque des revendications 1 à 5, **caractérisé en ce qu'**une électronique de commande (S) du ventilateur (1) est dotée d'une puce EEPROM (7) et l'électronique de l'écran (4) est réalisée avec une puce EEPROM adaptée RFID (8), qui est réalisée pour être synchronisée avec la puce EEPROM (7).

7. Ventilateur (1) selon l'une quelconque des revendications 1 à 6, **caractérisé en ce qu'**un dispositif de commutation activable par un opérateur est prévu, qui est réalisé pour passer entre différents affichages de paramètres de configuration à des états configurés différemment du ventilateur (1).

8. Ventilateur (1) selon la revendication 7, **caractérisé en ce que** le dispositif de commutation comprend au moins un composant semi-conducteur électronique sensible à la lumière (15), qui est agencé de sorte qu'il peut être sollicité avec de l'énergie lumineuse par le biais d'une ouverture d'émission (60).

9. Ventilateur (1) selon la revendication 8, **caractérisé en ce que** le composant semi-conducteur électronique sensible à la lumière (15) est soit une photodiode soit un phototransistor, lequel est agencé de sorte que lors du recouvrement ou de la fermeture de l'ouverture d'émission (60) une opération de commutation pour la commutation de l'affichage est déclenchée.

10. Ventilateur (1) selon la revendication 1 à 6, **caractérisé en ce que** le dispositif d'affichage (A) est agencé derrière une fenêtre-regard transparente (9) d'un boîtier (2) du ventilateur et est relié en contact électrique avec un circuit imprimé d'une commande de ventilateur.
